(19) Europäisches Patentamt
European Patent Office
Office européen des brevets

(11) EP 1 533 333 B1

(12) # EUROPÄISCHE PATENTSCHRIFT

(45) Veröffentlichungstag und Bekanntmachung des Hinweises auf die Patenterteilung:
**27.02.2008 Patentblatt 2008/09**

(51) Int Cl.:
***C08G 77/46*** *(2006.01)* ***C08G 77/38*** *(2006.01)*
***B01D 19/04*** *(2006.01)*

(21) Anmeldenummer: **04026342.8**

(22) Anmeldetag: **05.11.2004**

(54) **Emulgatorfreie Öl in Wasser-Emulsionen von Organopolysiloxanen und deren Verwendung in technischen Anwendungen**

Emulsifier-free oil-in-water type emulsions of organopolysiloxanes and their use in technical applications

Emulsions à base d'organopolysiloxanes du type huile dans eau exemptés d'émulsifiants et leurs utilisation dans des applications techniques

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **18.11.2003 DE 10353856**

(43) Veröffentlichungstag der Anmeldung:
**25.05.2005 Patentblatt 2005/21**

(73) Patentinhaber: **Evonik Goldschmidt GmbH**
**45127 Essen (DE)**

(72) Erfinder:
- **Gippert, Michael**
**45138 Essen (DE)**
- **Schnelle, Ralf, Dr.**
**45133 Essen (DE)**
- **Silber, Stefan, Dr.**
**47804 Krefeld (DE)**
- **Sucker, Roland**
**59368 Werne (DE)**
- **Wolfgram, Dirk**
**44879 Bochum (DE)**

(56) Entgegenhaltungen:
**DE-A1- 3 427 496**
**DE-A1- 3 938 109**
**US-A- 4 028 218**
**US-A- 5 804 099**
**US-A1- 2003 124 158**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der Erfindung sind emulgatorfreie Öl in Wasser-Emulsionen von Organopolysiloxanen und deren Verwendung in technischen Anwendungen.

Emulsionen sind Mischungen von mindestens zwei im wesentlichen nicht miteinander mischbare/lösliche Flüssigkeiten, die mechanisch unter Verwendung von beispielsweise Hochgeschwindigkeitsrührern, Mischpumpen, Ultraschallgeneratoren emulgiert werden.

Da Silicone aufgrund ihrer ausgeprägten hydrophoben Eigenschaften nur schwer mechanisch in Wasser emulgierbar sind, war zur Herstellung stabiler Emulsionen die Mitverwendung von tensidischen, hydrophilen Emulgatoren, welche die zwischen den Phasen bestehende Oberflächenspannung verringern und deren Homogenisierung ermöglichen, bislang unerlässlich.

Zusätzlich sind oft noch organische und/oder anorganische Co-Emulgatoren und weitere Hilfsstoffe zu deren Herstellung und Stabilisierung erforderlich, wie beispielsweise Lösungsvermittler, Verdicker oder Schutzkolloide.

Diese Emulsionen sind Bestandteil einer Vielzahl von Formulierungen in den verschiedensten Anwendungsgebieten, wie in kosmetischen Haut-/Haar-Reinigungs- oder Pflegemitteln, in Reinigungsmitteln für Haushalt und Industrie, in Wäscheweichspülformulierungen (Softener), Entformungsmitteln und zur Entschäumung, insbesondere wässriger Systeme.

Als unerwünschte Begleiterscheinung bewirken die in ihnen enthaltenen oberflächenaktiven Substanzen aber, dass die eingebrachte Luft in Form von Schaum stabilisiert wird.

Schaum entsteht häufig bei der Herstellung und/oder bei der Applikation wässriger Systeme. Schaumkronen, die sich bei Rührund Dispergiervorgängen oder in den Gebinden während des Abfüllvorganges ansammeln, verlängern die Produktionszeiten oder vermindern das Effektivvolumen der Anlage.

Bei der Applikation von Beschichtungssystemen, wie beispielsweise Lacken, Dispersionsfarben und Druckfarben, stört der Schaum, da dieser nach Trocknung des Films zu unerwünschten Oberflächendefekten führt. Beim Drucken lässt er Farbwannen überlaufen und verhindert gute Farbübertragung.

Um diesem Problem zu begegnen, werden Entschäumer bzw. Entlüfter zugesetzt, die einerseits die Schaumbildung verhindern sollen und andererseits schon entstandenen Schaum zerstören sollen, wobei die negativen Auswirkungen auf sonstige Parameter so gering als möglich sein sollten.

Nach gängiger Auffassung wird unterschieden zwischen Entschäumern und Entlüftern.

Entschäumer führen in wässrigen Systemen zu einer Zerstörung des Makroschaums an der Oberfläche und zur Vermeidung von großen Lufteinschlüssen.

Entlüfter führen während der Applikation die feinteilig eindispergierte Luft möglichst schnell aus der Tiefe der Formulierung, wie beispielsweise den Lackfilm, heraus. In der Praxis ist diese klare Differenzierung meist nicht möglich. So sind Entschäumer zu einem gewissen Grad auch wirksam gegen Mikroschaum.

Entschäumer müssen eine kontrollierte Unverträglichkeit mit dem System haben, wobei zu hohe Verträglichkeit meist negativ für die Entschäumung ist, zu niedrige Verträglichkeit oftmals zu Defekten, insbesondere in Farben, Lacken oder Beschichtungen, führen kann.

Um eine entsprechend optimale Wirkung zu erzielen, muss der Entschäumer in Form stabiler feinster Tröpfchen vorliegen. Wässrige Entschäumeremulsionen sind Emulsionen vom Typ O/W, deren dispergierte Phasen, die aus dem Entschäumerwirkstoff bestehen, Tröpfchen mit einem mittleren Teilchendurchmesser zwischen 1 und 10 $\mu$m aufweisen.

Entschäumerwirkstoffe können Öle verschiedenster Art sein, z.B.: pflanzliche und tierische Öle, Paraffin- und Mineralöle. Diese werden zunehmend durch hydrophobe, gegebenenfalls organisch modifizierte Polysiloxane und Polyoxyalkylen-Polysiloxan-Blockmischpolymerisate und deren Mischungen miteinander und/oder untereinander ergänzt oder ersetzt. Es sind sehr aktive Wirkstoffe, die ihre Stärken besonders in den modernen wässrigen Lack- und Druckfarbensystemen zeigen. Neben dem Vorteil, den Glanz nicht zu reduzieren, zeichnen sich diese Entschäumer durch gute Verträglichkeit aus.

Es gibt eine Vielzahl von Veröffentlichungen und Patentschriften, in denen die Wirkungsweise der Polysiloxane beschrieben ist und in denen Hinweise für die Auswahl der geeigneten Siloxane und ihrer Zubereitungsformen gegeben werden.

So vorteilhaft diese bekannten Entschäumungsmittel auch eingesetzt werden können, weisen alle noch den Nachteil auf, dass zur Herstellung geeigneter Emulsionen tensidische, hydrophile, organische Emulgatoren mitverwendet werden müssen und sie daher hinsichtlich Schaumverhütung oder Schaumbeseitigung von wässrigen Systemen, sowie der Vermeidung der Nachteile bei der Applikation, verbesserungsbedürftig sind.

Die Herstellung der stabilen Entschäumeremulsionen soll mit einfachen Rührwerkzeugen möglich sein, ohne dass eine aufwendige Rührtechnik erforderlich ist, oder besondere Vorsichtsmaßnahmen beachtet werden müssen. Dabei werden hohe Anforderungen an die Stabilität der Emulsionen gestellt. Die Emulsionen sollen insbesondere eine hohe Stabilität bei thermischer und mechanischer Belastung aufweisen.

Die vorliegende Erfindung hat sich die Lösung dieses technischen Problems zur Aufgabe gestellt.

Gegenstand der vorliegenden Erfindung sind deshalb emulgatorfreie Öl in Wasser-Emulsionen auf der Basis organofunktionell modifizierter Polysiloxane, enthaltend mindestens zwei der Komponenten A) bis D)

A) der allgemeinen Formel (I)

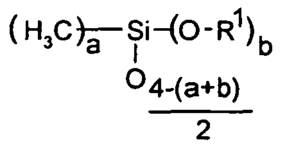

worin

- $R^1$ im durchschnittlichen Molekül gleich oder verschieden sein kann und einen Alkylrest mit 1 bis 4 Kohlenstoffatomen bedeutet,
- a einen mittleren Zahlenwert von 1 bis 1,95 hat und
- b einen mittleren Zahlenwert von 0,05 bis 1 hat, vorzugsweise 0,05 bis 0,35 und wobei die mittleren Molmassen zwischen 700 g/mol und 8.500 g/mol, vorzugsweise zwischen 1.250 g/mol und 4.500 g/mol, liegen.

B) der allgemeinen Formel (II)

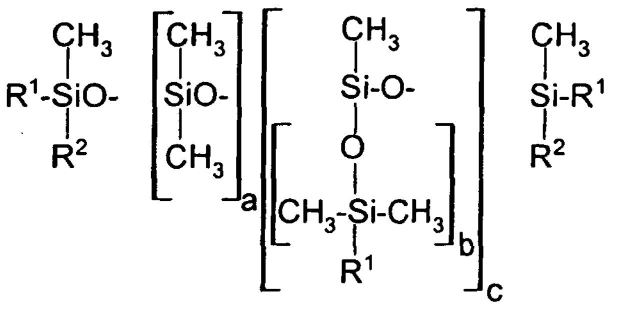

worin

- $R^1$ im durchschnittlichen Molekül gleich oder verschieden sein kann und einem gegebenfalls Doppelbindungen enthaltenden Kohlenwasserstoffrest mit 1 bis 8 Kohlenstoffatomen oder den Rest -Z- $(C_nH_{2n}\text{-O-})_m$ R', mit einer Funktionalisierungsdichte (FD) ≤ 500, vorzugsweise ≤ 100, insbesondere ≤ 50 und wobei
- R' ein Wasserstoffrest oder ein Alkylrest mit 1 bis 8 Kohlenstoffatomen ist,
- $R^2$ Phenyl, Ethyl, Methyl, Hydroxy, Amin, mit mindestens 90 % Methyl ist,
- Z ein divalenter Rest der Formel -O-, -NH-, $-NR^3-$ mit $R^3$ = $C_{1\text{-}4}$-Alkylrest, -S- ist,
- n einen mittleren Zahlenwert von größer 2,7 bis 4,0, vorzugsweise 2,8 bis 3,0,
- m einen mittleren Zahlenwert von 5 bis 130, vorzugsweise von 6 bis 50, insbesondere 8 bis 15,
- a einen mittleren Zahlenwert von 4 bis 1.500, vorzugsweise 5 bis 500, insbesondere 10 bis 80,
- b einen mittleren Zahlenwert von 0 bis 100, vorzugsweise 0 bis 10, insbesondere 0 bis 1,
- c einen mittleren Zahlenwert von 0 bis 100, vorzugsweise 0 bis 10, inbesondere 0 bis 1 hat.

C) der allgemeinen Formel (III)

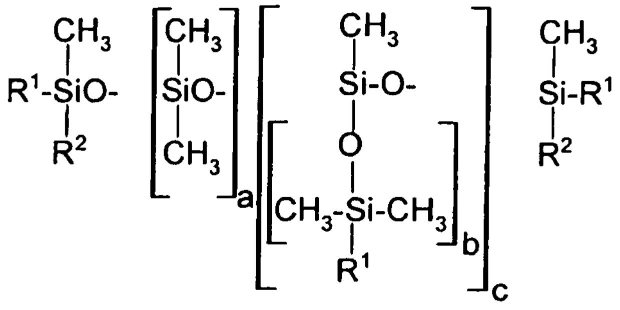

worin

- $R^1$ im durchschnittlichen Molekül gleich oder verschieden sein kann und einen Alkylrest mit 1 bis 8 Kohlenstoffatomen oder den Rest $-Z-(C_nH_{2n}-O-)_m$ R', mit einer Funktionalisierungsdichte FD von 15 bis 50, vorzugsweise 20 bis 40, insbesondere 25 bis 35 hat und wobei
- R' ein Wasserstoffrest oder ein Alkylrest mit 1 bis 8 Kohlenstoffatomen oder Acyl ist,
- $R^2$ Phenyl, Ethyl, Methyl, Hydroxy, Amin, mit mindestens 90 % Methyl ist,
- Z ein zweiwertiger Rest der Formel - $(CH_2)_p$-O- oder $-CH_2-CH(CH_3)-CH_2-O-$ mit p = 2 , 3, 4 ist,
- n einen mittleren Zahlenwert von 2,6 bis 4,0, vorzugsweise 2,8 bis 3,0,
- m einen mittleren Zahlenwert von 5 bis 130, vorzugsweise 6 bis 50, insbesondere 8 bis 15,
- a einen mittleren Zahlenwert von 4 bis 1.500, vorzugsweise 10 bis 1.000, insbesondere 40 bis 100,
- b einen mittleren Zahlenwert von 0 bis 100, vorzugsweise 0 bis 10, insbesondere 0,
- c einen mittleren Zahlenwert von 0 bis 100 hat.

D) der allgemeinen Formel (IV)

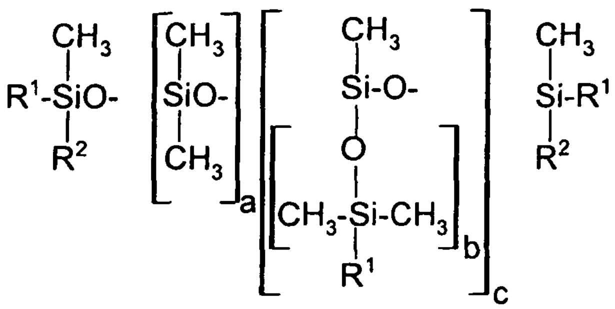

worin

- $R^1$ im durchschnittlichen Molekül gleich oder verschieden sein kann und einen Alkylrest mit 1 bis 8 Kohlenstoffatomen oder den Rest $-Z-(C_nH_{2n}-O-)_m$R' mit einer Funktionalisierungsdichte FD von 3 bis < 15 , vorzugsweise 4 bis < 15, insbesondere 7 bis < 15 hat und wobei
- R' ein Wasserstoffrest oder ein Alkylrest mit 1 bis 8 Kohlenstoffatomen oder Acyl ist,
- $R^2$ Phenyl, Ethyl, Methyl, Hydroxy, Amin, mit mindestens 90 % Methyl ist,
- Z ein zweiwertiger Rest der Formel $-(CH_2)_p$-O- oder $-CH_2-CH(CH_3)-CH_2-O-$ mit p = 2, 3, 4 ist,
- n einen mittleren Zahlenwert von 2,7 bis 4,0, vorzugsweise 2,8 bis 3,0,
- m einen mittleren Zahlenwert von 5 bis 130, vorzugsweise 20 bis 80, insbesondere 25 bis 45,
- a einen mittleren Zahlenwert von 4 bis 1.500, vorzugsweise 10 bis 1.000, insbesondere 40 bis 100,
- b einen mittleren Zahlenwert von 0 bis 50, vorzugsweise 0 bis 10, insbesondere 0,
- c einen mittleren Zahlenwert von 1 bis 100, vorzugsweise 2 bis 30, insbesondere 4 bis 12 hat.

Gegebenenfalls können die o.g. Komponenten hydrophobe Festkörper enthalten. Zur Formulierung können weitere übliche Hilfs-und Zusatzstoffe wie Verdicker, Schutzkolloide und/oder Konservierungsstoffe verwendet werden.

Die Funktionalisierungsdichte FD organomodifizierter Polysiloxane berechnet sich aus dem Verhältnis der

Gesamtzahl nichtsubstituierter Silicon-Einheiten zur Gesamtzahl der substituierten Silicon-Einheiten. Beispielhaft hier:

$MD_nD^R{}_mM$

| | | | |
|---|---|---|---|
| M- | M-Einheiten | $OSi(CH_3)_3$ | |
| D- | nichtssubstituierte D-Einheiten | $OSi(CH_3)_2$ | (n- Anzahl) |
| $D^R$- | substituierte D-Einheiten | $OSiRCH_3$ | (m- Anzahl) |

$$FD = n + 2/m$$

Weitere Gegenstände der Erfindung sind durch die Ansprüche gekennzeichnet.

Es war überraschend, dass die erfindungsgemäßen Kombinationen spontan in Wasser emulgieren und auch bei erhöhter Temperatur und/oder mechanischer Belastung, sowie Lagerung stabil bleiben.

Erfindungsgemäß werden mindestens zwei, vorzugsweise drei Komponenten, insbesondere jedoch alle 4 Komponenten A) bis D) gleichzeitig mitverwendet, da einerseits diese Kombination die Herstellung und Stabilität der Emulsionen positiv beeinflusst und sich andererseits die angestrebte Wirkung, wie insbesondere die entschäumende und/oder entlüftende Wirkung, sowie die Stabilität in wässrigen Emulsionen und/oder Dispersionen der unterschiedlichen technischen Anwendungsbereiche, wie zum Beispiel von Lacken, Farben, Beschichtungen, Trennmitteln, Bautenschutzmitteln, Reinigungsmitteln oder kosmetischen Formulierungen, erheblich verbessern lässt.

Erfindungsgemäß herzustellende Entschäumeremulsionen können in an sich bekannter Weise unter anderem zur Entschäumung von Tensidlösungen, Tensidkonzentraten, Latexdispersionen (z.B. für Papierbeschichtungen, Klebstoffe, Dispersionsfarben), Lacken, wässrigen Druckfarben und weiteren wässrigen Bindemitteln verwendet werden.

Dabei wird zur Herstellung folgendes Verfahren eingesetzt:

a) 95 bis 40 Gew.-Teile Wasser werden in einem Rührgefäß vorgelegt und gegebenenfalls mit Verdickern, Schutzkolloiden und/oder Konservierungshilfsmitteln beaufschlagt.

b) Zu dieser eingestellten Mischung werden 5 bis 60 Gew.-% einer Mischung gegeben, die die Verbindungen der Formel A) bis D) enthalten kann, mindestens aber zwei derselben enthält, wobei das Mischungsverhältnis aller im Gemisch enthaltenen Komponenten A) bis D) derart ist, dass von jeder einzelnen Komponente mindestens 5 Gew.-Teile im Gemisch enthalten sind, wobei sich die Summe der verwendeten Gew-Teile auf 100 ergänzt. Gegebenenfalls können diesem Gemisch bis zu 15 Gew.-Teilen entsprechender Füllstoffe zugesetzt werden.

c) Nach Zusatz der o.g. Mischung wird mit einem geeigneten technischen Mittel homogenisiert.

Beispielhafte Verdicker und Schutzkolloide sind Polymere verschiedener Gruppen, wie Cellulosederivate, Polyvinylalkohole, Polyacrylate, Polyurethane, Polyharnstoffe, und Polyetherpolyole.

Beispiele hydrophober anorganischer Feststoffe sind gegebenenfalls hydrophobierte Kieselsäure, Aluminiumoxid, Erdalkalicarbonate oder ähnliche dem Stand der Technik bekannte und übliche feinteilige Feststoffe. Organische hydrophobe Substanzen sind für diesen Zweck bekannte Erdalkalisalze von langkettigen Fettsäuren mit 12 bis 22 Kohlenstoffatomen, die Amide solcher Fettsäuren, sowie Polyharnstoffe und Wachse.

Beispiele:

Allgemeines Beispiel 1:

Herstellung einer wässrigen Emulsion

95 bis 40 Gew.-Teile Wasser werden in einem Rührgefäß vorgelegt und mit 0,05 bis 5 Gew.-Teilen eines Verdickungsmittels versetzt. Danach wird der pH-Wert dieser Mischung mit einer Base auf pH 8 eingestellt.
Zu dieser eingestellten Mischung werden 5 bis 60 Gew.-% einer Mischung gegeben, die alle Verbindungen der Formel A bis D enthalten kann, mindestens aber zwei derselben enthält, wobei das Mischungsverhältnis aller im Gemisch enthaltenen Komponenten A bis D derart ist, dass von jeder einzelnen Komponente mindestens 5 Gew.-Teile im Gemisch enthalten sind, wobei sich die Summe der verwendeten Gew.-Teile auf 100 ergänzt. Gegebenenfalls können diesem

Gemisch bis zu 15 Gew.-Teilen entsprechender Füllstoffe zugesetzt werden.

Nach Zusatz der o.g. Mischung wird mit einem geeigneten Rührorgan homogenisiert.

Beispiel 2:

92,5 Gew.-Teile eines Siloxans der Formel A) (a = 1,92; b = 0,13) werden mit 7,5 Gew.-Teilen einer feindispersen Kieselsäure versetzt. Die so erhaltene Mischung wird 3 h lang auf 100 °C erhitzt. 10,0 Gew.-Teile dieses getemperten Produktes werden zusammen mit 10 Gew.-Teilen eines Siloxans der Formel B (c = 0, a = 16, $R^1$ = -Z- $(C_nH_{2n}\text{-O-})_mR'$ mit R' = $C_3$ und n = 2,8, m = 12, Z = O) in 80 Gew.-Teilen einer Mischung, aus 95 Gew.-Teile Wasser und 2,5 Gew.-Teilen einer 30 %igen Emulsion eines Verdickungsmittels auf Basis eines Polyacrylates (im Handel z.B. erhältlich unter der Bezeichnung Viscalex® HV 30), welche mit 2,5 Gew.-Teilen einer 10 %igen NaOH auf einen pH-Wert von 8 eingestellt wurde, zugegeben und scherkraftarm miteinander verrührt.

Beispiel 3:

92,5 Gew.-Teile eines Siloxans der Formel A) (a = 1,93, b = 0,15) werden mit 7,5 Gew.-Teilen einer feindispersen Kieselsäure versetzt. Die so erhaltene Mischung wird 3 h lang auf 100 °C erhitzt.

10,0 Gew.-Teile dieses getemperten Produktes werden zusammen mit 10 Gew.-Teilen eines Siloxans der Formel B (c = 0, a = 16, $R^1$ = -Z- $(C_nH_{2n}\text{-O-})_mR'$ mit R'= $C_3$ und n = 2,8, m = 12; Z = O) in 80 Gew.-Teilen einer Mischung, aus 95 Gew.-Teilen Wasser und 2,5 Gew.-Teilen einer 30 %igen Emulsion eines Verdickungsmittels auf Basis eines Polyacrylates (im Handel z.B. erhältlich unter der Bezeichnung Viscalex® HV 30), welche mit 2,5 Gew.-Teilen einer 10 %igen NaOH auf einen pH-Wert von 8 eingestellt wurde, zugegeben und scherkraftarm miteinander verrührt.

Vergleichsbeispiele:

Beispiel 4:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt.

Zu dieser eingestellten Mischung werden 20,0 Gew.-Teile der getemperten Mischung aus Beispiel 2 gegeben und mit einer Turbine bei einer Umdrehungsgeschwindigkeit von 1.000 U/min für 5 min gerührt.

Es ist nicht möglich eine Emulsion zu erhalten.

Beispiel 5:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt.

Zu dieser eingestellten Mischung werden 10,0 Gew.-Teile der getemperten Mischung aus Beispiel 3 gegeben und mit einer Turbine bei einer Umdrehungsgeschwindigkeit von 1.000 U/min für 2 min gerührt. Danach werden 10,0 Gew.-Teile eines Siloxans der Formel C (c = 0,5, b = 0, a = 65, $R^1$ = - $(CH_2)_p$-O- $(C_nH_{2n}\text{-O-})_mR'$ mit R' = H und n = 2,8, m = 12, p = 3) dieser Emulsion zugesetzt und erneut mit einer Turbine bei einer Umdrehungsgeschwindigkeit von 1.000 U/min für 3 min gerührt.

Beispiel 6:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt.

Zu dieser eingestellten Mischung werden 10,0 Gew.-Teile eines Siloxans der Formel B (c = 0, a = 16, $R^1$ = -Z- $(C_nH_{2n}\text{-O-})_mR'$ mit R' = $C_3$ und n = 2,8, m = 12, Z = O) zusammen mit 10,0 Gew. -Teilen eines Siloxans der Formel C) (c = 0,5, b = 0, a = 65, $R^1$ = $-(CH_2)_p$-O-$(C_nH_{2n}\text{-O-})_mR'$ mit R' = H und n = 2,8, m = 12, p = 3) gegeben und mit einem MIG-Rührer (Mehrimpulsgegenstromrührer) bei 500 U/min 10 min lang verrührt.

Beispiel 7:

76 Gew.-Teile Wasser werden in einem Rührgefäß vorgelegt und mit 2,0 Gew.-Teilen einer 30 %igen Emulsion

eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt.

Zu dieser eingestellten Mischung werden 14,3 Gew.-Teile eines Siloxans der Formel B) (c = 0, a = 16, $R^1$ = -Z- $(C_nH_{2n}\text{-O-})_mR'$ mit R' = $C_3$ und n = 2,8, m = 12, Z = O) zusammen mit 5,7 Gew.-Teilen eines Siloxans der Formel D) (c = 8,5, b = 0, a = 70, $R^1$ = $-(CH_2)_p\text{-O-}(C_nH_{2n}\text{-O-})_mR'$ mit R' = H und n = 2,9, m = 33, p = 3) gegeben und mit einem MIG-Rührer (Mehrimpulsgegenstromrührer) bei 500 U/min 10 min lang verrührt.

Beispiel 8:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt.

Zu dieser eingestellten Mischung werden 10,0 Gew.-Teile der getemperten Mischung aus Beispiel 2 zusammen mit 7,5 Gew.-Teilen eines Siloxans der Formel B) (c = 0, a = 16, $R^1$ = -Z- $(C_nH_{2n}\text{-O-})_mR'$ mit R' = $C_3$ und n = 2,8, m = 12, Z = O) sowie 2,5 Gew.-Teilen eines Siloxans der Formel C) (c = 0,5, b = 0, a = 65, $R^1$ = - $(CH_2)_p$-O- $(C_nH_{2n}\text{-O-})_mR'$ mit R' = H und n = 2,8, m = 12, p = 3) zugegeben und mit einem MIG-Rührer (Mehrimpulsgegenstromrührer) bei 500 U/min 10 min lang verrührt.

Beispiel 9:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt.

Zu dieser eingestellten Mischung werden 10,0 Gew.-Teile eines Siloxans der Formel B (c = 0, a = 16, $R^1$ = -Z- $(C_nH_{2n}\text{-O-})_mR'$ mit R' = $C_3$ und n = 2,8, m = 12, Z = O) zusammen mit 8,0 Gew.-Teilen eines Siloxans der Formel A) (c = 3, a + b = 28 und $R^1$ = $OC_2H_5$) sowie 2,0 Gew.-Teilen eines Siloxans der Formel D) (c = 8,5, b = 0, a = 70, $R^1$ = - $(CH_2)_p\text{-O-}(C_nH_{2n}\text{-O-})_mR'$ mit R' = H und n = 2,9, m = 33, p = 3) zugegeben und scherkraftarm miteinander verrührt.

Beispiel 10:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt.

Zu dieser eingestellten Mischung werden 5,0 Gew.-Teile eines Siloxans der Formel B) (c = 0, a = 16, $R^1$ = -Z- $(C_nH_{2n}\text{-O-})_mR'$ mit R' = $C_3$ und n = 2,8, m = 12, Z = O) zusammen mit 5,0 Gew.-Teilen eines Siloxans der Formel C) (c = 0,5, b = 0, a = 65, $R^1$ = - $(CH_2)_p$-O- $(C_nH_{2n}\text{-O-})_mR'$ mit R'= H und n = 2,8, m = 12, p = 3) sowie 10,0 Gew.-Teilen eines Siloxans der Formel D) (c = 8,5, b = 0, a = 70, $R^1$ = $-(CH_2)_p\text{-O-}(C_nH_{2n}\text{-O-})_mR'$ mit R' = H und n = 2,9, m = 33, p = 3) zugegeben und mit einem MIG-Rührer (Mehrimpulsgegenstromrührer) bei 500 U/min 10 min lang verrührt.

Beispiel 11:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt.

Zu dieser eingestellten Mischung werden zusammen 8,0 Gew.-Teile der getemperten Mischung aus Beispiel 2, sowie 5,0 Gew.-Teile eines Siloxans der Formel B) (c = 0, a = 16, $R^1$ = -Z- $(C_nH_{2n}\text{-O-})_mR'$ mit R' = $C_3$ und n = 2,8, m = 12; Z = O) und 2,0 Gew.-Teile eines Siloxans der Formel D) (c = 8,5, b = 0, a = 70, $R^1$ = - $(CH_2)_p\text{-O-}(C_nH_{2n}\text{-O-})_mR'$ mit R' = H und n = 2,9, m = 33, p = 3) gegeben und mit einem MIG-Rührer (Mehrimpulsgegenstromrührer) bei 500 U/min 10 min lang verrührt. Danach werden 5,0 Gew. -Teile eines Siloxans der Formel C) (c = 0,5, b = 0, a = 65, $R^1$ = $(CH_2)_p$-O-$(C_nH_{2n}\text{-O-})_mR'$ mit R' = H und n = 2, 8, m = 12, p = 3) unter Rühren mit einem MIG-Rührer bei 500 U/min portionsweise dieser Emulsion zugesetzt und abschließend weitere 2 min lang verrührt.

Beispiel 12:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt. Zu dieser eingestellten Mischung werden 14,3 Gew.-Teile eines Siloxans der Formel C) (c = 0,5, b = 0, a = 65, $R^1$ =

$-(CH_2)_p-O-(C_nH_{2n}-O-)_mR'$ mit R' = H und n = 2,8, m = 12, p = 3) zusammen mit 5,7 Gew.-Teilen eines Siloxans der Formel D) (c = 8,5, b = 0, a = 70, $R^1 = -(CH_2)_p-O-(C_nH_{2n}-O-)_mR'$ mit R' = H und n = 2,9, m = 33, p = 3) gegeben und mit einem MIG-Rührer (Mehrimpulsgegenstromrührer) bei 500 U/min 10 min lang verrührt.

Beispiel 13:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt. Zu dieser eingestellten Mischung werden zusammen 10,0 Gew.-Teile der getemperten Mischung aus Beispiel 3, sowie 5,0 Gew.-Teile eines Siloxans der Formel B) (c = 0, a = 16, $R^1 = -Z-(C_nH_{2n}-O-)_mR'$ mit R' = $C_3$ und n = 2,8, m = 12; Z = O) und 1,0 Gew.-Teile eines Siloxans der Formel D) (c = 8,5, b = 0, a = 70, $R^1 = -(CH_2)_p-O-(C_nH_{2n}-O-)_mR'$ mit R' = H und n = 2,9, m = 33, p = 3) gegeben und mit einem MIG-Rührer (Mehrimpulsgegenstromrührer) bei 500 U/min 10 min lang verrührt. Danach werden 4,0 Gew.-Teile eines Siloxans der Formel C) (c = 0,5, b = 0, a = 65, $R^1 = -(CH_2)_p-O-(C_nH_{2n}-O-)_mR'$ mit R' = H und n = 2,8, m = 12, p = 3) unter Rühren mit einem MIG-Rührer bei 500 U/min kontinuierlich innerhalb von 5 min dieser Emulsion zugetropft und abschließend weitere 2 min lang verrührt.

Beispiel 14:

57 Gew.-Teile Wasser werden in einem Rührgefäß vorgelegt und mit 1,5 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 1,5 Gew.-Teilen einer 10 %igen NaOH auf 8 eingestellt. Zu dieser eingestellten Mischung werden zusammen 16,0 Gew.-Teile der getemperten Mischung aus Beispiel 2, sowie 10,0 Gew.-Teile eines Siloxans der Formel B) (c = 0, a = 16, $R^1 = -Z-(C_nH_{2n}-O-)_mR'$ mit R' = $C_3$ und n = 2,8, m = 12; Z = O) und 4,0 Gew.-Teile eines Siloxans der Formel D) (c = 8,5, b = 0, a = 70, $R^1 = -(CH_2)_p-O-(C_nH_{2n}-O-)_mR'$ mit R' = H und n = 2,9, m = 33, p = 3) gegeben und mit einem MIG-Rührer (Mehrimpulsgegenstromrührer) bei 500 U/min 10 min lang verrührt. Danach werden 10,0 Gew.-Teile eines Siloxans der Formel C) (c = 0,5, b = 0, a = 65, $R^1 = -(CH_2)_p-O-(C_nH_{2n}-O-)_mR'$ mit R' = H und n = 2,8, m = 12, p = 3) unter Rühren mit einem MIG-Rührer bei 500 U/min dieser Emulsion zugesetzt und abschließend weitere 2 min lang verrührt.

Beispiel 15:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt. Zu dieser eingestellten Mischung werden zusammen 8,0 Gew.-Teile der getemperten Mischung aus Beispiel 2, sowie 5,0 Gew.-Teile eines Siloxans der Formel B) (c = 0, a = 16, $R^1 = -Z-(C_nH_{2n}-O-)_mR'$ mit R' = $C_3$ und n = 2,8, m = 12; Z = O) und 2,0 Gew.-Teile eines Siloxans der Formel D) (c = 8,5, b = 0, a = 70, $R^1 = -(CH_2)_p-O-(C_nH_{2n}-O-)_mR'$ mit R' = H und n = 2,9, m = 33, p = 3) gegeben und mit einem MIG-Rührer (Mehrimpulsgegenstromrührer) bei 500 U/min 10 min lang verrührt. Danach werden 5,0 Gew.-Teile eines Siloxans der Formel C (c = 0,5, b = 0, a = 65, $R^1 = -(CH_2)_p-O-(C_nH_{2n}-O-)_mR'$ mit R' = H und n = 2,8, m = 12, p = 3) unter Rühren mit einem MIG-Rührer bei 500 U/min dieser Emulsion zugesetzt und abschließend weitere 2 min lang verrührt.

Vergleichsbeispiel 16:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt. Zu dieser eingestellten Mischung werden 20,0 Gew.-Teile eines Siloxans der Formel B (c = 0, a = 16, $R^1 = -Z-(C_nH_{2n}-O-)_nR'$ mit R' = $C_3$ und n = 2,8, m = 12; Z = O) gegeben und mit einem MIG-Rührer (Mehrimpulsgegenstromrührer) bei 500 U/min 10 min lang verrührt. Es ist so möglich eine Emulsion zu erhalten, allerdings wirkt die so erhaltene Emulsion nicht mehr als Entschäumer.

Vergleichsbeispiel 17:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt. Zu

dieser eingestellten Mischung werden 20,0 Gew.-Teile eines Siloxans der Formel C) (c = 0,5, b = 0, a = 65, $R^1$ = $-(CH_2)_p-O-(C_nH_{2n}-O-)_mR'$ mit R' = H und n = 2,8, m = 12, p = 3) gegeben und mit einem MIG-Rührer (Mehrimpulsgegenstromrührer) bei 500 U/min 10 min lang verrührt. Die anfangs erhaltene O/W-Emulsion invertiert in kürzester Zeit und ist dann als W/O-Emulsion nicht mehr einfach mit Wasser verdünnbar.

Vergleichsbeispiel 18:

76 Gew.-Teile Wasser werden in einem Rührgefäß vorgelegt und mit 2,0 Gew.-Teilen einer 30 %igen Emulsion eines Verdickungsmittels auf Basis eines Polyacrylates (im Handel z.B. erhältlich unter der Bezeichnung Viscalex® HV 30) versetzt. Danach wird der pH-Wert dieser Mischung mit 2,0 Gew.-Teilen einer 10 %igen NaOH auf 8 eingestellt. Zu dieser eingestellten Mischung werden 20,0 Gew.-Teile eines Siloxans der Formel D (c = 8,5, b = 0, a = 70, $R^1$ = $-(CH_2)_p-O-(C_nH_{2n}-O-)_mR'$ mit R' = H und n = 2,8, m = 33, p = 3) gegeben und mit einem MIG-Rührer (Mehrimpulsgegenstromrührer) bei 500 U/min 10 min lang verrührt.

Es ist so möglich eine Emulsion zu erhalten, allerdings wirkt die so erhaltene Emulsion nicht mehr als Entschäumer.

Anwendung in wässrigen Formulierungen:

50,0 g einer Flexodruckfarbe, welche zuvor auf eine Viskosität von 23" (" = Sekunden Auslaufzeit) bei Messung mit dem DIN 4 Auslaufbecher eingestellt wurde, werden in einen Polyethylenbecher mit einem Nennvolumen von 180 ml auf 0,1 g genau eingewogen. Zu dieser Farbe werden 0,25 % (0,125 g) Entschäumeremulsion zugewogen.

Die Entschäumeremulsion wird am Dispermaten mit einer Dissolverscheibe (d = 3 cm) für 120" bei einer Umdrehungsgeschwindigkeit von 1.500 U/min eingearbeitet.

Die mit Enschäumeremulsion versetzte Flexodruckfarbe wird 1 Tag gelagert.

Eine kleine Menge (ca. 1 ml) dieser Farbe wird mit Hilfe eines 12 $\mu$m Spiralrakels auf Hostaphanfolie appliziert. Die im PE-Becher verbleibende mit Entschäumer versetzte Farbe wird anschließend für 60" bei einer Umdrehungsgeschwindigkeit von 3.000 U/min mit einer Dissolverscheibe (d = 3 cm) am Dispermaten gerührt. Nach Ablauf der Zeit werden rasch 45 g der aufgeschäumten Farbe zur Feststellung des Volumens in einen tarierten und graduierten Messzylinder mit einem Nennvolumen von 100 ml eingegossen und das gesamte Volumen abgelesen. Je niedriger das abgelesene Volumen, desto besser die Entschäumerleistung.

42,0 g dieser aufgeschäumten Farbe werden erneut in einen Polyethylenbecher mit einem Nennvolumen von 180 ml auf 0,1 g genau eingewogen, mit 8,0 g Wasser versetzt und erneut für 60" bei einer Umdrehungsgeschwindigkeit von 3.000 U/min mit einer Dissolverscheibe (d = 3 cm) am Dispermaten gerührt. Nach Ablauf der Zeit werden rasch 45 g der erneut aufgeschäumten Farbe zur Feststellung des Volumens in einen tarierten 100 ml Messzylinder eingegossen und das gesamte Volumen erneut abgelesen.

Nach Schaumfreiheit wird erneut eine kleine Menge (ca. 1 ml) der nun verdünnten Flexodruckfarbe mit Hilfe eines 12 $\mu$m Spiralrakels auf Hostaphanfolie appliziert.
An Hand der beiden Farbaufzüge wird nach deren Trocknung, rein visuell, die Verträglichkeit der Entschäumeremulsion über die Menge und/oder Art an Oberflächendefekten bestimmt.

Ergebnisse:

| Viskosität der Farbe: | | DIN4 : 23" | | DIN4 : 15" | |
|---|---|---|---|---|---|
| Entschäumer | Einsatzkonzentration % | ml/45 g | Verträglichkeit | ml/45 g | Verträglichkeit |
| Beispiel 7 | 0,25 | 65 | 1,25 | 74 | 2 |
| Beispiel 8 | 0,25 | 49 | 3 | 60 | 2,5 |
| Beispiel 9 | 0,25 | 49 | 3 | 50 | 3 |
| Beispiel 10 | 0,25 | 53 | 2 | 48 | 2,75 |
| Beispiel 11 | 0,25 | 48 | 3 | 50 | 2,5 |
| Beispiel 12 | 0,25 | 60 | 1,25 | 63 | 2 |
| Beispiel 15 | 0,25 | 50 | 3 | 59 | 2 |

(fortgesetzt)

| Viskosität der Farbe: | | DIN4 : 23" | | DIN4 : 15" | |
|---|---|---|---|---|---|
| Entschäumer | Einsatzkonzentration % | ml/45 g | Verträglichkeit | ml/45 g | Verträglichkeit |
| *Handelsüblicher E 1 | 0,25 | 60 | 3 | 73 | 3 |
| **Handelsüblicher E 2 | 0,25 | 57 | 2,5 | 68 | 2,5 |
| ohne | ---- | 84 | 1 | 94 | 1 |
| */**Auf Basis von Organopolysiloxan und einen hydrophilen tensidischen Emulgator enthaltend | | | | | |

Beurteilung der Verträglichkeit:

1 - sehr verträglich, 2 - verträglich, 3 - unverträglich, 4 - sehr unverträglich

Zur Bestimmung der Emulsionsstabilität wird 1,0 ml der Entschäumeremulsion in einen mit 99,0 ml destilliertem Wasser gefüllten graduierten Messzylinder gegeben und fünf mal leicht geschüttelt. 10,0 ml dieser Verdünnung werden erneut mit 90 ml destilliertem Wasser in dem graduierten Messzylinder verdünnt und fünf mal leicht geschüttelt. Anschließend wird die Zeit bis zu einer evtl. Phasentrennung gemessen und notiert.

Ergebnisse:

| Entschäumeremulsion | Zeit |
|---|---|
| Beispiel 2 | > 400 min |
| Beispiel 3 | > 400 min |
| Beispiel 5 | > 400 min |
| Beispiel 6 | > 400 min |
| Beispiel 7 | > 400 min |
| Beispiel 9 | > 400 min |
| Beispiel 10 | > 400 min |
| Beispiel 11 | > 400 min |
| Beispiel 13 | > 400 min |
| Beispiel 14 | > 400 min |
| *Handelsüblicher Entschäumer 1 | 120 min |
| **Handelsüblicher Entschäumer 2 | 360 min |
| */**Auf Basis von Organopolysiloxan und einen hydrophilen tensidischen Emulgator enthaltend | |

## Patentansprüche

1. Emulgatorfreie Öl in Wasser-Emulsionen auf Basis organofunktionell modifizierter Polysiloxane, enthaltend mindestens zwei der Komponenten A) bis D)

   A) der allgemeinen Formel (I)

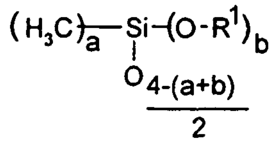

worin

$R^1$ im durchschnittlichen Molekül gleich oder verschieden sein kann und einen Alkylrest mit 1 bis 4 Kohlenstoffatomen bedeutet,
a einen mittleren Zahlenwert von 1 bis 1,95 hat und
b einen mittleren Zahlenwert von 0,05 bis 1 hat,

B) der allgemeinen Formel (II)

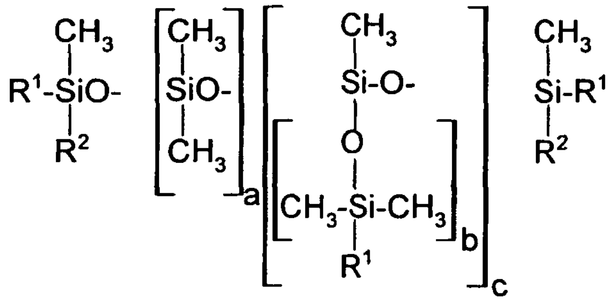

worin

$R^1$ im durchschnittlichen Molekül gleich oder verschieden sein kann und einen gegebenenfalls Doppelbindungen enthaltenden Kohlenwasserstoffrest mit 1 bis 8 Kohlenstoffatomen oder den Rest $-Z-(C_nH_{2n}-O-)_mR'$, mit einer Funktionalisierungsdichte (FD) $\leq$ 500 und wobei
R' ein Wasserstoffrest oder ein Alkylrest mit 1 bis 8 Kohlenstoffatomen ist,
$R^2$ Phenyl, Ethyl, Methyl, Hydroxy, Amin, mit mindestens 90 % Methyl ist,
Z ein divalenter Rest der Formel -O-, -NH-, $-NR^3-$ mit $R^3 = C_{1-4}$-Alkylrest, -S- ist,
n einen mittleren Zahlenwert von größer 2,7 bis 4,0,
m einen mittleren Zahlenwert von 5 bis 130,
a einen mittleren Zahlenwert von 4 bis 1.500,
b einen mittleren Zahlenwert von 0 bis 100,
c einen mittleren Zahlenwert von 0 bis 100 hat.

C) der allgemeinen Formel (III)

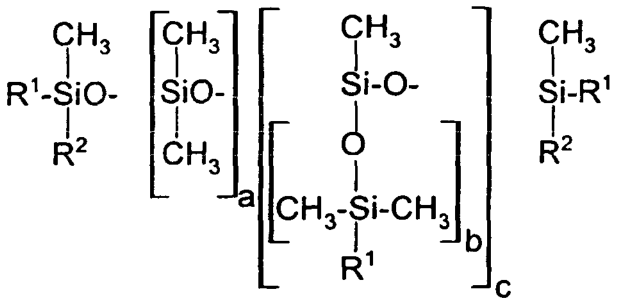

worin

$R^1$ im durchschnittlichen Molekül gleich oder verschieden sein kann und einen Alkylrest mit 1 bis 8 Kohlenstoffatomen oder den Rest $-Z-(C_nH_{2n}-O-)_mR'$, mit einer Funktionalisierungsdichte FD von 15 bis 50 und wobei
R' ein Wasserstoffrest oder ein Alkylrest mit 1 bis 8 Kohlenstoffatomen oder Acyl ist,
$R^2$ Phenyl, Ethyl, Methyl, Hydroxy, Amin, mit mindestens 90 % Methyl ist,
Z ein zweiwertiger Rest der Formel $-(CH_2)_p-O-$ oder $-CH_2-CH(CH_3)-CH_2-O-$ mit p = 2, 3, 4 ist,
n einen mittleren Zahlenwert von 2,6 bis 4,
m einen mittleren Zahlenwert von 5 bis 130,
a einen mittleren Zahlenwert von 4 bis 1.500,
b einen mittleren Zahlenwert von 0 bis 100,
c einen mittleren Zahlenwert von 0 bis 100 hat.

D) der allgemeinen Formel (IV)

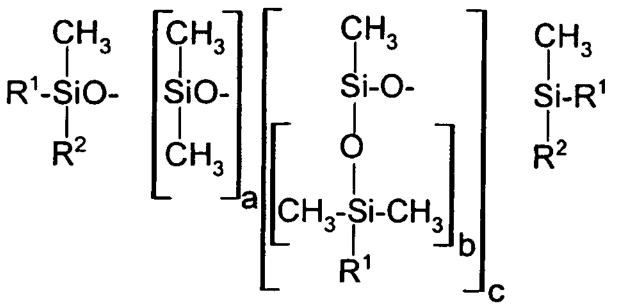

worin bedeuten

$R^1$ im durchschnittlichen Molekül gleich oder verschieden sein kann und einen Alkylrest mit 1 bis 8 Kohlenstoffatomen oder den Rest $-Z-(C_nH_{2n}-O-)_m$ R' mit einer Funktionalisierungsdichte FD von 3 bis < 15 und wobei
R' ein Wasserstoffrest oder ein Alkylrest mit 1 bis 8 Kohlenstoffatomen oder Acyl ist,
$R^2$ Phenyl, Ethyl, Methyl, Hydroxy, Amin, mit mindestens 90 % Methyl ist,
Z ein zweiwertiger Rest der Formel $(CH_2)_p-O-$ oder $-CH_2-CH(CH_3)-CH_2-O-$ mit p = 2, 3, 4 ist,
n einen mittleren Zahlenwert von 2,7 bis 4,0,
m einen mittleren Zahlenwert von 5 bis 130,
a einen mittleren Zahlenwert von 4 bis 1.500,
b einen mittleren Zahlenwert von 0 bis 50,
c einen mittleren Zahlenwert von 1 bis 100 hat,

und gegebenenfalls weitere übliche Hilfs- und Zusatzstoffe.

**2.** Emulgatorfreie Öl in Wasser-Emulsionen gemäß Anspruch 1, **dadurch gekennzeichnet, dass** als Komponente A) Verbindungen der allgemeinen Formel (I) mitverwendet werden, in denen

$R^1$ im durchschnittlichen Molekül gleich oder verschieden sein kann und einen Alkylrest mit 1 bis 4 Kohlenstoffatomen bedeutet,
a einen mittleren Zahlenwert von 1 bis 1,95 und
b einen mittleren Zahlenwert von 0,05 bis 1 hat.

**3.** Emulgatorfreie Öl in Wasser-Emulsionen gemäß Anspruch 1, **dadurch gekennzeichnet, dass** als Komponente B) Verbindungen der allgemeinen Formel (II) mitverwendet werden, in denen

$R^1$ im durchschnittlichen Molekül gleich oder verschieden sein kann und einen gegebenenfalls Doppelbindungen enthaltenden Kohlenwasserstoffrest mit 1 bis 8 Kohlenstoffatomen oder den Rest $-Z-(C_nH_{2n}-O-)_m R'$, mit einer Funktionalisierungsdichte FD $\leq$ 500 und wobei
R' ein Wasserstoffrest oder ein Alkylrest mit 1 bis 8 Kohlenstoffatomen ist,
$R^2$ Phenyl, Ethyl, Methyl, Hydroxy, Amin, mit mindestens 90 % Methyl ist,
Z ein divalenter Rest der Formel -O-, -NH-, $-NR^3-$ mit $R^3 = C_{1-4}$-Alkylrest, -S- ist,
n einen mittleren Zahlenwert von größer 2,7 bis 4,0,
m einen mittleren Zahlenwert von 5 bis 130,
a einen mittleren Zahlenwert von 4 bis 1.500,
b einen mittleren Zahlenwert von 0 bis 100,
c einen mittleren Zahlenwert von 0 bis 100 hat.

**4.** Emulgatorfreie Öl in Wasser-Emulsionen gemäß Anspruch 1, **dadurch gekennzeichnet, dass** als Komponente C) Verbindungen der allgemeinen Formel (III) mitverwendet werden, in denen

$R^1$ im durchschnittlichen Molekül gleich oder verschieden sein kann und einen Alkylrest mit 1 bis 8 Kohlenstoffatomen oder den Rest $-Z-(C_nH_{2n}-O-)_m R'$, mit einer Funktionalisierungsdichte FD von 15 bis 50 hat und wobei
R' ein Wasserstoffrest oder ein Alkylrest mit 1 bis 8 Kohlenstoffatomen oder Acyl ist,
$R^2$ Phenyl, Ethyl, Methyl, Hydroxy, Amin, mit mindestens 90 % Methyl ist,
Z ein zweiwertiger Rest der Formel $-(CH_2)_p-O-$ oder $-CH_2-CH(CH_3)-CH_2-O-$ mit p = 2, 3, 4 ist,
n einen mittleren Zahlenwert von 2,6 bis 4,0,
m einen mittleren Zahlenwert von 5 bis 130,
a einen mittleren Zahlenwert von 4 bis 1.500,
b einen mittleren Zahlenwert von 0 bis 100,
c einen mittleren Zahlenwert von 0 bis 100 hat.

**5.** Emulgatorfreie Öl in Wasser-Emulsionen gemäß Anspruch 1, **dadurch gekennzeichnet, dass** als Komponente D) Verbindungen der allgemeinen Formel (IV) mitverwendet werden, in denen

$R^1$ im durchschnittlichen Molekül gleich oder verschieden sein kann und einen Alkylrest mit 1 bis 8 Kohlenstoffatomen oder den Rest $-Z-(C_nH_{2n}-O-)_m R'$ mit einer Funktionalisierungsdichte FD von 3 bis < 15 und wobei
R' ein Wasserstoffrest oder ein Alkylrest mit 1 bis 8 Kohlenstoffatomen oder Acyl ist,
$R^2$ Phenyl, Ethyl, Methyl, Hydroxy, Amin, mit mindestens 90 % Methyl ist,
Z ein zweiwertiger Rest der Formel $-(CH_2)_p-O-$ oder $-CH_2-CH(CH_3)-CH_2-O-$ mit p = 2, 3, 4 ist,
n einen mittleren Zahlenwert von 2,7 bis 4,0,
m einen mittleren Zahlenwert von 5 bis 130,
a einen mittleren Zahlenwert von 4 bis 1.500,
b einen mittleren Zahlenwert von 0 bis 50,
c einen mittleren Zahlenwert von 1 bis 100 hat.

**6.** Emulgatorfreie Öl in Wasser-Emulsionen gemäß den Ansprüchen 1 bis 5, im wesentlichen enthaltend

(I) 5 bis 60 Gew.-%, bezogen auf die Gesamtformulierung, mindestens zwei der Komponenten A) bis D), mit der Maßgabe, dass der Anteil der Einzelkomponente $\geq$ 5 Gew.-Teile beträgt und die Summe der mitverwendeten Komponenten sich auf 100 Gew.-Teile ergänzt und
(II) 0 bis 15 Gew.-% übliche Hilfs-und Zusatzstoffe und ad 100 Gew.-% Wasser.

7. Verwendung der emulgatorfreien Öl in Wasser-Emulsionen gemäß den Ansprüchen 1 bis 6 zur Herstellung von Entschäumer(stamm)emulsionen.

## Claims

1. Emulsifier-free oil-in-water emulsions based on organofunctionally modified polysiloxanes, comprising at least two of the components A) to D)

A) of the general formula (I)

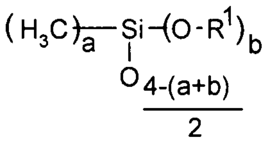

in which

$R^1$ in the average molecule may be identical or different and is an alkyl radical having 1 to 4 carbon atoms,
a has an average numerical value of from 1 to 1.95 and
b has an average numerical value of from 0.05 to 1,

B) of the general formula (II)

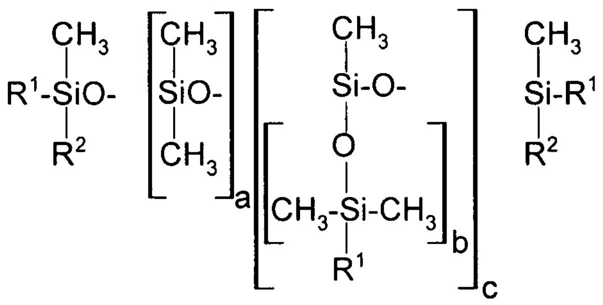

in which

$R^1$ in the average molecule may be identical or different and is a hydrocarbon radical optionally containing double bonds and having 1 to 8 carbon atoms or the radical $-Z-(C_nH_{2n}-O-)_m$ R', having a functionalization density (FD) ≤ 500, and in which
R' is a hydrogen radical or an alkyl racial having 1 to 8 carbon atoms,
$R^2$ is phenyl, ethyl, methyl, hydroxyl or amino, with at least 90% methyl,
Z is a divalent radical of the formula -O-, -NH-, $-NR^3-$ with $R^3 = C_{1-4}$-alkyl radical, or -S-,
n has an average numerical value from greater than 2.7 to 4.0,
m has an average numerical value from 5 to 130,
a has an average numerical value from 4 to 1500,
b has an average numerical value from 0 to 100,
c has an average numerical value from 0 to 100

C) of the general formula (III)

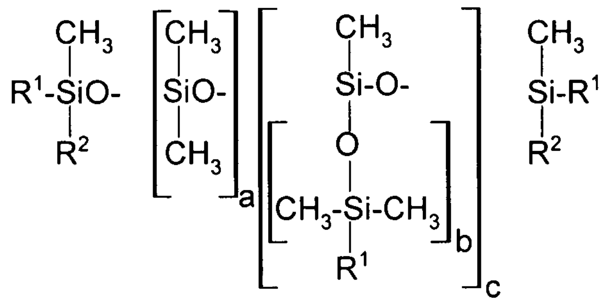

in which

$R^1$ in the average molecule may be identical or different and is an alkyl radical having 1 to 8 carbon atoms or the radical $-Z-(C_nH_{2n}-O-)_m$ R', having a functionalization density FD of from 15 to 50, and in which
R' is a hydrogen radical or an alkyl radical having 1 to 8 carbon atoms or acyl,
$R^2$ is phenyl, ethyl, methyl, hydroxyl or amino, with at least 90% methyl,
Z is a divalent radical of the formula $-(CH_2)_p-O-$ or $-CH_2-CH(CH_3)-CH_2-O-$ with p = 2, 3 or 4,
n has an average numerical value of from 2.6 to 4,
m has an average numerical value from 5 to 130,
a has an average numerical value from 4 to 1500,
b has an average numerical value from 0 to 100,
c has an average numerical value from 0 to 100;

D) of the general formula (IV)

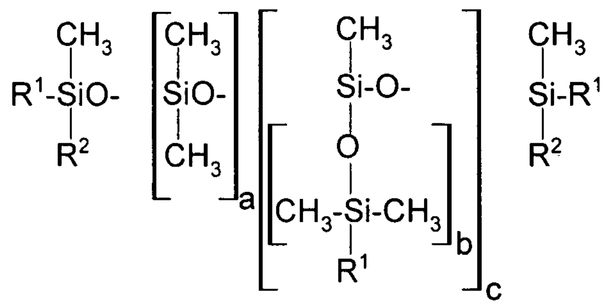

in which

$R^1$ in the average molecule may be identical or different and is an alkyl radical having 1 to 8 carbon atoms or the radical $-Z-(C_nH_{2n}-O-)_m$ R', having a functionalization density FD of from 3 to < 15, and in which
R' is a hydrogen radical or an alkyl radical having 1 to 8 carbon atoms or acyl,
$R^2$ is phenyl, ethyl, methyl, hydroxyl or amino, with at least 90% methyl,
Z is a divalent radical of the formula $-(CH_2)_p-O-$ or $-CH_2-CH(CH_3)-CH_2-O-$ where p = 2, 3 or 4,
n has an average numerical value from 2.7 to 4.0,
m has an average numerical value from 5 to 130,
a has an average numerical value from 4 to 1500,
b has an average numerical value from 0 to 50,
c has an average numerical value from 1 to 100,

and optionally further customary auxiliaries and additives.

**2.** Emulsifier-free oil-in-water emulsions according to Claim 1, **characterized in that** compounds of the general formula (I) in which

$R^1$ in the average molecule may be identical or different and is an alkyl radical having 1 to 4 carbon atoms,
a has an average numerical value from 1 to 1.95 and
b has an average numerical value from 0.05 to 1,

are concomitantly used as component A).

3. Emulsifier-free oil-in-water emulsions according to Claim 1, **characterized in that** compounds of the general formula (II) in which

$R^1$ in the average molecule may be identical or different and is a hydrocarbon radical optionally containing double bonds and having 1 to 8 carbon atoms or the radical $-Z-(C_nH_{2n}-O-)_m R'$, having a functionalization density FD $\leq$ 500, and in which
R' is a hydrogen radical or an alkyl radical having 1 to 8 carbon atoms,
$R^2$ is phenyl, ethyl, methyl, hydroxyl or amino, with at least 90% methyl,
Z is a divalent radical of the formula -O-, -NH-, $-NR^3-$ with $R^3 = C_{1-4}$-alkyl radical, or -S-,
n has an average numerical value from greater than 2.7 to 4.0,
m has an average numerical value from 5 to 130,
a has an average numerical value from 4 to 1500,
b has an average numerical value from 0 to 100,
c as an average numerical value from 0 to 100,

are concomitantly used as component B).

4. Emulsifier-free oil-in-water emulsions according to Claim 1, **characterized in that** compounds of the general formula (III) in which

$R^1$ in the average molecule may be identical or different and is an alkyl radical having 1 to 8 carbon atoms or the radical $-Z-(C_nH_{2n}-O-)_m R'$, having a functionalization density FD of from 15 to 50, and in which
R' is a hydrogen radical or an alkyl radical having 1 to 8 carbon atoms or acyl,
$R^2$ is phenyl, ethyl, methyl, hydroxyl or amino, with at least 90% methyl,
Z is a divalent radical of the formula $-(CH_2)_p-O-$ or $-CH_2-CH(CH_3)-CH_2-O-$ with p = 2, 3 or 4,
n has an average numerical value from 2.6 to 4.0,
m has an average numerical value from 5 to 130,
a has an average numerical value from 4 to 1500,
b has an average numerical value from 0 to 100,
c has an average numerical value from 0 to 100,

are concomitantly used as component C).

5. Emulsifier-free oil-in-water emulsions according to Claim 1, **characterized in that** compounds of the general formula (IV) in which

$R^1$ in the average molecule may be identical or different and is an alkyl radical having 1 to 8 carbon atoms or the radical $-Z-(C_nH_{2n}-O-)_m R'$, having a functionalization density FD of from 3 to < 15, and in which
R' is a hydrogen radical or an alkyl radical having 1 to 8 carbon atoms or acyl,
$R^2$ is phenyl, ethyl, methyl, hydroxyl or amino, with at least 90% methyl,
Z is a divalent radical of the formula $-(CH_2)_p-O-$ or $-CH_2-CH(CH_3)-CH_2-O-$ with p = 2, 3 or 4,
n has an average numerical value from 2.7 to 4.0,
m has an average numerical value from 5 to 130,
a has an average numerical value from 4 to 1500,
b has an average numerical value from 0 to 50,
c has an average numerical value from 1 to 100,

are concomitantly used as component D).

6. Emulsifier-free oil-in-water emulsions according to Claims 1 to 5, substantially comprising

(I) from 5 to 60% by weight, based on the total formulation, of at least two of the components A) to D), with the

proviso that the proportion of the individual component is ≥ 5 parts by weight and the sum of the concomitantly used components is 100 parts by weight, and
(II) from 0 to 15% by weight of customary auxiliaries and additives, and water to 100% by weight.

**7.** Use of the emulsifier-free oil-in-water emulsions according to Claims 1 to 6 for the preparation of antifoam (stock) emulsions.

## Revendications

**1.** Emulsions huile dans l'eau sans émulsifiant à base de polysiloxanes modifiés sur le plan organofonctionnel, contenant au moins deux des composants A) à D)

A) de formule générale (I)

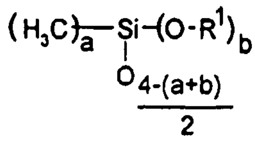

dans laquelle

$R^1$ dans la molécule moyenne peut être identique ou différent et signifie un radical alkyle avec 1 à 4 atomes de carbone,
a a une valeur numérique moyenne de 1 à 1,95, et
b a une valeur numérique moyenne de 0,05 à 1,

B) de formule générale (II)

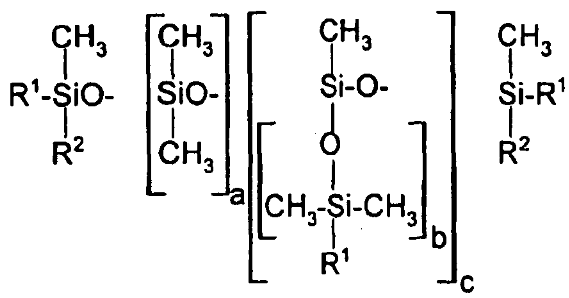

dans laquelle

$R^1$ dans la molécule moyenne peut être identique ou différent et signifie un radical hydrocarbure avec 1 à 8 atomes de carbone contenant éventuellement des liaisons doubles ou le radical $-Z-(C_nH_{2n}-O-)_mR'$, avec une densité de fonctionnalisation (FD) ≤ 500 et dans laquelle
R' est un radical hydrogène ou un radical alkyle avec 1 à 8 atomes de carbone,
$R^2$ est un phényle, un éthyle, un méthyle, un hydroxy, une amine avec au moins 90% de méthyle,
Z est un radical divalent de formule -O-, -NH-, $-NR^3-$ avec $R^3$ = radical alkyle en $C_1$-$C_4$, -S-,
n a une valeur numérique moyenne plus grande que 2,7 et jusqu'à 4,0,
m a une valeur numérique moyenne de 5 à 130,
a a une valeur numérique moyenne de 4 à 1500,
b a une valeur numérique moyenne de 0 à 100,
c a une valeur numérique moyenne de 0 à 100 ;

C) de formule générale (III)

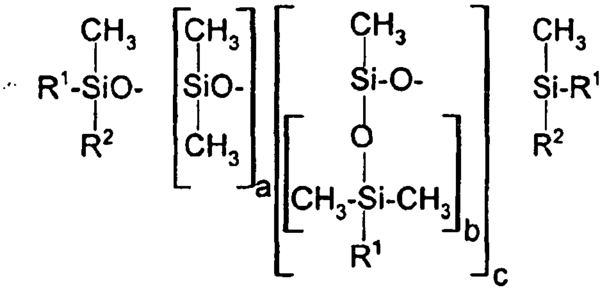

dans laquelle

$R^1$ dans la molécule moyenne peut être identique ou différent et signifie un radical alkyle avec 1 à 8 atomes de carbone ou le radical $-Z-(C_nH_{2n}-O-)_mR'$, avec une densité de fonctionnalisation FD de 15 à 50 et dans laquelle
R' est un radical hydrogène ou un radical alkyle avec 1 à 8 atomes de carbone ou un acyle,
$R^2$ est un phényle, un éthyle, un méthyle, un hydroxy, une amine avec au moins 90% de méthyle,
Z est un radical divalent de formule $-(CH_2)_p-O-$ ou $-CH_2-CH(CH_3)-CH_2-O-$ avec p = 2, 3, 4,
n a une valeur numérique moyenne de 2,6 à 4,
m a une valeur numérique moyenne de 5 à 130,
a a une valeur numérique moyenne de 4 à 1500,
b a une valeur numérique moyenne de 0 à 100,
c a une valeur numérique moyenne de 0 à 100 ;

D) de formule générale (IV)

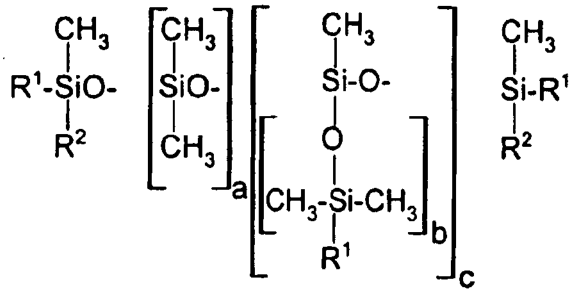

dans laquelle

$R^1$ dans la molécule moyenne peut être identique ou différent et signifie un radical alkyle avec 1 à 8 atomes de carbone ou le radical $-Z-(C_nH_{2n}-O-)_mR'$, avec une densité de fonctionnalisation FD de 3 à < 15 et dans laquelle
R' est un radical hydrogène ou un radical alkyle avec 1 à 8 atomes de carbone ou un acyle,
$R^2$ est un phényle, un éthyle, un méthyle, un hydroxy, une amine avec au moins 90% de méthyle,
Z est un radical divalent de formule $-(CH_2)_p-O-$ ou $-CH_2-CH(CH_3)-CH_2-O-$ avec p = 2, 3, 4,
n a une valeur numérique moyenne de 2,7 à 4,0,
m a une valeur numérique moyenne de 5 à 130,
a a une valeur numérique moyenne de 4 à 1500,
b a une valeur numérique moyenne de 0 à 50,
c a une valeur numérique moyenne de 1 à 100,

et éventuellement d'autres adjuvants et additifs habituels.

**2.** Emulsions huile dans l'eau sans émulsifiant selon la revendication 1, **caractérisée en ce qu'**on utilise conjointement comme composant A) des composés de formule générale (I), dans laquelle

$R^1$ dans la molécule moyenne peut être identique ou différent et signifie un radical alkyle avec 1 à 4 atomes de carbone,
a a une valeur numérique moyenne de 1 à 1,95,
b a une valeur numérique moyenne de 0,05 à 1.

**3.** Emulsions huile dans l'eau sans émulsifiant selon la revendication 1, **caractérisée en ce qu'**on utilise conjointement comme composant B) des composés de formule générale (II), dans laquelle

$R^1$ dans la molécule moyenne peut être identique ou différent et signifie un radical hydrocarbure avec 1 à 8 atomes de carbone contenant éventuellement des liaisons doubles ou le radical $-Z-(C_nH_{2n}-O-)_mR'$, avec une densité de fonctionnalisation FD ≤ 500 et où
R' est un radical hydrogène ou un radical alkyle avec 1 à 8 atomes de carbone,
$R^2$ est un phényle, un éthyle, un méthyle, un hydroxy, une amine avec au moins 90% de méthyle,
Z est un radical divalent de formule -O-, -NH-, $-NR^3-$ avec $R^3$ = radical alkyle en $C_1$-$C_4$, -S-,
n a une valeur numérique moyenne plus grande que 2, 7 à 4,0,
m a une valeur numérique moyenne de 5 à 130,
a a une valeur numérique moyenne de 4 à 1500,
b a une valeur numérique moyenne de 0 à 100,
c a une valeur numérique moyenne de 0 à 100.

**4.** Emulsions huile dans l'eau sans émulsifiant selon la revendication 1, **caractérisée en ce qu'**on utilise conjointement comme composant C) des composés de formule générale (III), dans laquelle

$R^1$ dans la molécule moyenne peut être identique ou différent et signifie un radical alkyle avec 1 à 8 atomes de carbone, ou le radical $-Z-(C_nH_{2n}-O-)_mR'$, avec une densité de fonctionnalisation FD de 15 à 50 et dans laquelle
R' est un radical hydrogène ou un radical alkyle avec 1 à 8 atomes de carbone ou un acyle,
$R^2$ est un phényle, un éthyle, un méthyle, un hydroxy, une amine avec au moins 90% de méthyle,
Z est un radical divalent de formule $-(CH_2)_p-O-$ ou $-CH_2-CH(CH_3)-CH_2-O-$ avec p = 2, 3, 4,
n a une valeur numérique moyenne de 2,6 à 4,0,
m a une valeur numérique moyenne de 5 à 130,
a a une valeur numérique moyenne de 4 à 1500,
b a une valeur numérique moyenne de 0 à 100,
c a une valeur numérique moyenne de 0 à 100.

**5.** Emulsions huile dans l'eau sans émulsifiant selon la revendication 1, **caractérisée en ce qu'**on utilise conjointement comme composant D) des composés de formule générale (IV), dans laquelle

$R^1$ dans la molécule moyenne peut être identique ou différent et signifie un radical alkyle avec 1 à 8 atomes de carbone ou le radical $-Z-(C_nH_{2n}-O-)mR'$, avec une densité de fonctionnalisation FD de 3 à < 15 et dans laquelle
R' est un radical hydrogène ou un radical alkyle avec 1 à 8 atomes de carbone ou un acyle,
$R^2$ est un phényle, un éthyle, un méthyle, un hydroxy, une amine avec au moins 90% de méthyle,
Z est un radical divalent de formule $-(CH_2)_p-O-$ ou $-CH_2-CH(CH_3)-CH_2-O-$ avec p = 2, 3, 4,
n a une valeur numérique moyenne de 2,7 à 4,0,
m a une valeur numérique moyenne de 5 à 130,
a a une valeur numérique moyenne de 4 à 1500,
b a une valeur numérique moyenne de 0 à 50,
c a une valeur numérique moyenne de 1 à 100.

**6.** Emulsions huile dans l'eau sans émulsifiant selon les revendications 1 à 5, contenant essentiellement

(I) 5 à 60 % en poids, sur base de la formulation totale, d'au moins deux des composants A) à D), étant entendu que la proportion des différents composants est ≥ 5 parties en poids et la somme des composants utilisés conjointement complète fait 100 parties en poids, et
(II)0 à 15 % en poids d'adjuvants et additifs habituels et jusqu'à 100 % en poids d'eau.

**7.** Utilisation des émulsions huile dans l'eau sans émulsifiant selon les revendications 1 à 6 pour la fabrication d'émulsions (mères) de démoussants.